# EUROPEAN PATENT SPECIFICATION

(11) **EP 1 100 713 B1**
(45) Date of publication and mention of the grant of the patent: **19.03.2003**
(21) Application number: 99934978.0
(22) Date of filing: 26.07.1999
(51) Int. Cl.: B62D 25/16

(54) **APPARATUS FOR REDUCING ROAD VEHICLE SPRAY**
APPARAT ZUR VERMINDERUNG DES SPRÜHWASSERS EINES FAHRZEUGES
APPAREIL DESTINE A REDUIRE LES PROJECTIONS D'UN VEHICULE ROUTIER

(30) Priority: 25.07.1998 GB 9816195
(43) Date of publication of application: 23.05.2001
(73) Proprietor: Sheppard, Lynn John, Bagshot, Surrey GU19 5LT (GB)
(72) Inventor: Sheppard, Lynn John, Bagshot, Surrey GU19 5LT (GB)
(74) Representative: Wolff, Francis Paul
(86) International application number: GB9902434
(87) International publication number: WO00006442

(56) References cited:
- EP-A- 0 150 588
- DE-C- 500 213
- US-A- 3 866 943
- US-A- 4 706 981
- US-A- 5 100 177
- US-A- 5 299 831

## Description

This invention relates to apparatus for reducing road vehicle spray. It is a common experience that road surface water is thrown up by the wheels, especially the rear wheels, of heavy road vehicles, to form potentially lethal plumes of spray, which severely reduce visibility for following or overtaking vehicles.

It is an object of the invention to provide apparatus that can be fitted to road vehicles, and in particular to heavy goods vehicles such as articulated lorry trailers, container lorries or tankers, as original equipment or as retrofit equipment for the aftermarket, for reducing such spray.

Many previous attempts have been made to control road vehicle spray, and many proposals exist for tackling the problem. For example, it is possible to exhaust spray mist as such from the wheel arch through openings in the inner face of the wheel arch, such that large volumes of mist are taken to a point at which water can be separated and discharged. It is also possible to catch water spray on a mud flap at the rear of the wheel arch, and provide gutters by which the caught water can be discharged back to the road behind the wheels. Possible embodiments are disclosed in documents DE-C-500 213, US-A-3 866 943.

According to the present invention, it is proposed to catch water spray on a specially adapted rear wall behind a road wheel, inside an enclosure for the wheel, and take the caught water away from the region of the wheel, with its turbulent air flows, while simultaneously extracting airborne spray droplets. Document US-A- 5 100 177 which is considered to represent the closest prior art of the invention shows an apparatus according to the preamble of the independent claim 1.

It has been observed that the spray pattern that is thrown out by a heavy vehicle such as an articulated lorry tends to exhibit a relatively minor spray thrown out by the front wheels, but often a vortex or natural suction pattern draws this spray back into the rear wheels, from which much denser spray is generated. Accordingly, in the invention, it is also proposed to draw airborne spray thrown up by forward sets of wheels into spray reducing apparatus physically associated with a rearward set of wheels.

The present invention concerns aspects of the apparatus described below. The scope of the invention extends to all novel aspects of the apparatus, whether individually or in combination with any of the other features disclosed herein.

In one aspect of the invention apparatus for reducing road vehicle spray may comprise a partial enclosure for a vehicle road wheel, the partial enclosure being defined by a top wall above the road wheel, a rear wall behind the road wheel (determined in accordance with the normal direction of forward motion of the vehicle), and a side wall depending from the top wall and extending forwardly from the rear wall on each side of the road wheel. Suitably, the rear wall is provided with means for collecting water from water spray in the partial enclosure, the front of the partial enclosure is substantially open and a side wall is provided with one or more air scoops for directing air passing outside the enclosure into the enclosure.

The front of the enclosure is left substantially open in order to form a large air intake into the enclosure. In traffic, on wet roads, there will be spray thrown up by other vehicles in the air drawn in to the enclosure; and when the apparatus is fitted behind other road wheels on the same vehicle, and especially when fitted to trailer wheels, the front air intake is especially valuable in drawing in the spray thrown up by other wheels. Any front wall of the enclosure dependent from the top wall may be substantially shorter than the side and rear walls, so as to leave an open air intake into the enclosure ahead of the road wheel.

The air scoops provided in the side walls create an air flow through the enclosure, when the vehicle is moving at sufficient speed, which can lower the pressure at the front air intake. This is believed to be particularly effective when the air scoops are alongside the wheel, and inject a further airflow into the air already moving through the narrow passage between the side walls and the wheel. Because of the air flow patterns around moving heavy road vehicles - which, although they do of course vary with individual designs, often show an inflow of front wheel spray towards trailing wheel sets - apparatus fitted to a rear wheel set, with suitably positioned air scoops, can in many cases be effective to suck in, and reduce the effects of, front wheel spray, as well as suppressing rear wheel spray to a significant extent.

One or more air scoops may be situated whereby to direct brake cooling air into the partial enclosure in the region of a wheel hub. One or more air scoops may be situated whereby to direct tyre cooling air into the partial enclosure in the region of a wheel tyre.

The enclosure may be provided with an air extractor duct. Spray laden air may be extracted from this partial enclosure through this duct, which may open from the enclosure on or adjacent the rear wall. The use of an extractor such as a pump to extract air from the enclosure, behind the wheel, assists the air intake function, as well as assisting the water extraction function of the apparatus.

The top wall may be provided by a conventional wheel arch, mudguard or fender, or may be any other part of the vehicle body above the wheel, or may be a part designed for the purpose of the invention. The lower edges of the side walls and of the rear wall may reach close to the road surface, to enhance the extraction of spray laden air into and from the enclosure. The side walls and rear walls may be provided by extension panels affixed sealingly to side edges and a rear edge of whatever serves as the top wall. Such panels can be provided as a kit of parts in accordance with the invention, for the conversion of an existing wheel arch or mudguard into apparatus according to the invention. Whether provided as part of a conversion or as original equipment, the outer side wall may be retained by quick release fastenings, to allow tyres to be inspected and wheels to be changed without inconvenience.

Some further preferred embodiments of the invention are set out below.

The rear wall may comprise a panel with a forward face towards the interior of the enclosure, an internal chamber in the panel behind the forward face, apertures in the forward face for admitting water into the chamber, and a water outlet from the chamber. Drain channels may be provided on the rear wall, for collecting water thrown against the wall, and a water extractor duct may be connected to the drain channels.

For typical trucks currently carrying freight on British motorways, the side walls may reach to within 150mm of the road surface when the vehicle is unladen, and may reach to within 50mm of the road surface when any suspension for the road vehicle wheel is compressed to its maximum extent. In general, relating the invention to wheel size for a wheel with a pneumatic tyre, the side walls of the partial enclosure may have lower edges situated alongside the inflated pneumatic tyre vertically below the wheel hub. Having regard to the low side walls and rear wall of the partial enclosure, they may be hinged whereby they can be raised for travel of the vehicle over uneven ground, or even over kerbs.

Two embodiments of the invention are shown, by way of example, in the accompanying diagrammatic drawings, in which:
Figure 1 is a side elevation illustrating a conventional double axle rear wheel set of a heavy goods trailer;
Figure 2 is a corresponding view showing the same trailer wheels fitted with a first embodiment of apparatus in accordance with the invention;
Figure 3 corresponds to Figure 2, with the outer side panel of the apparatus removed;
Figure 4 is a front view of the rear wall of the apparatus;
Figure 5 is a side view, in section, of the rear wall of the apparatus;
Figure 6 is a cross-sectional view through the apparatus, looking in a rearward direction;
Figure 7 is a perspective view illustrating a conventional tri-axle rear wheel set of a heavy goods trailer;
Figure 8 is a similar view showing the same trailer wheels fitted with a second embodiment of apparatus in accordance with the invention;
Figure 9 is a view from a similar viewpoint as in Figure 8, showing the rear wall panel in more detail, the side panels being removed;
Figure 10 is a perspective view of the rear wall panel from the front and one side;
Figure 11 is a cross section through the rear wall panel of the second embodiment of the invention, corresponding to the Figure 5 view of the first embodiment; and
Figure 12 is a perspective view of part of the enclosure, from the front and one side.

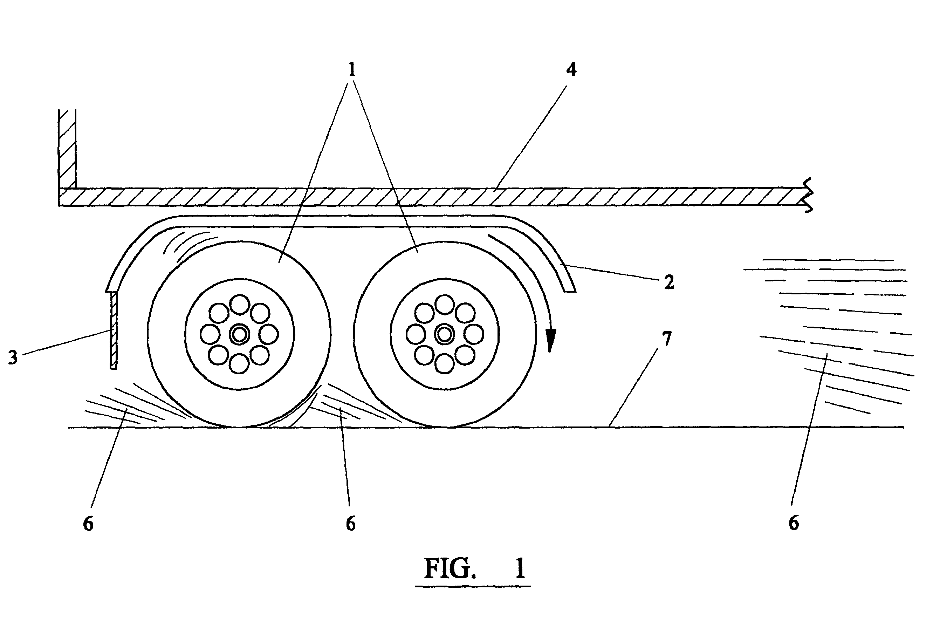

As shown in Figure 1, rear wheels 1 of a conventional trailer are located under a standard wheel arch 2, provided with a flexible hanging rear mud flap 3 of rubber or the like, under a trailer bed 4. Water spray 6, consisting of a range of droplet sizes down to a fine mist, is thrown up by each wheel from a wet road surface 7.

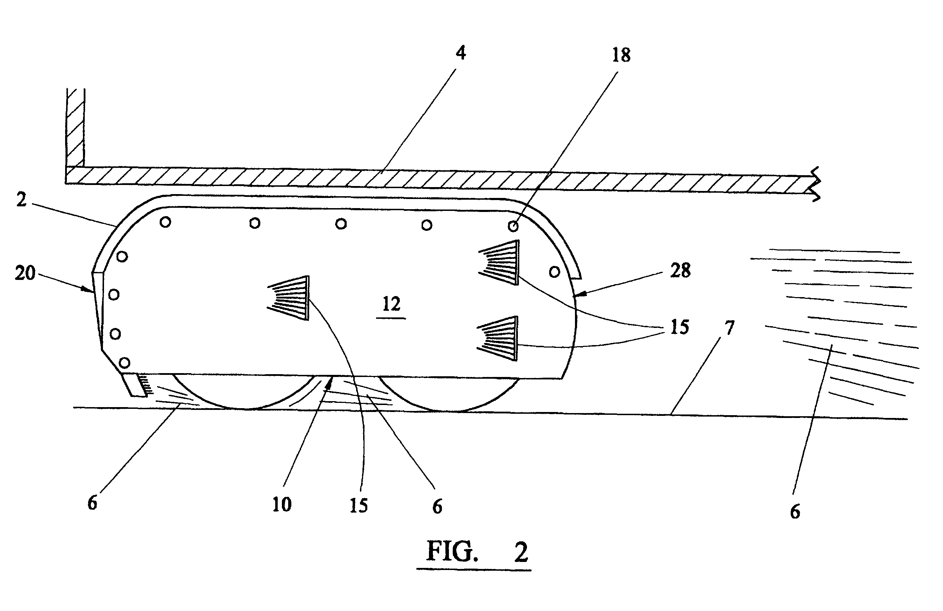

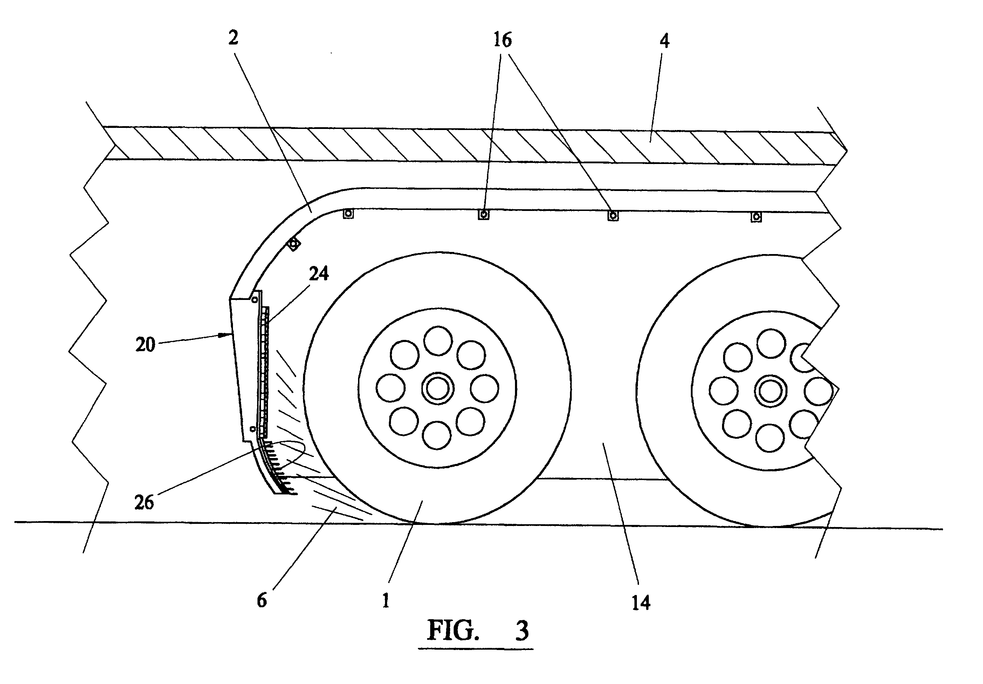

When modified in accordance with the invention, either during manufacture or by the addition of a kit of parts, the visible external appearance of the wheel set is as shown in Figure 2. The mud flap 3 has been removed, and an enclosure 10 for reducing spray has been fitted. This consists of a pair of side wall panels, one on each side of the wheels, of which the outer panel 12 can be seen in Figure 2, and the inner panel 14 in Figure 3. The outer panel is provided with three staggered air scoops 15 to direct passing air into the enclosure

As shown in Figures 2 and 3 together, side wall panel fixing points 16 are provided inside the wheel arch 2, and corresponding holes 18 are provided around the edge of the side wall panels through which a convenient form of gone turn" speed fastener can pass to hold the wall panels in place, and allow quick panel removal for wheel access. A sealing strip (not shown) between wall panels and wheel arch prevents leakage.

A rear wall 20 is affixed to the rear edge of the wheel arch and the rear edges of the side wall panel. The rear wall consists of an upper suction panel 24 and a lower drain panel 26. The suction panel is principally intended for removal of spray laden air, and the drain panel for the removal of liquid water, as will be described, although in practice each will extract both air and water from the inside of the partial enclosure 10 formed by the two wall panels, the wheel arch and the rear wall. This enclosure is open at the front 28, forming an air scoop which, with the side air scoops 15, collects spray thrown up by the front wheels of the vehicle and drawn towards the rear wheels by air flow past the vehicle. Even in dry conditions, these scoops direct brake-cooling air into the enclosure 10 in the region of the wheel hubs.

The lower edges of the side walls 12, 14 are typically about 75-100mm from the road surface 7, and the lower edge of the rear wall 20, at the bottom of drain panel 26, is even lower, about 50-75mm from the road surface. Drain panel 26 is mounted with its lower edge angled forwards, so that it lies approximately parallel with the tyre of rear wheel 1.

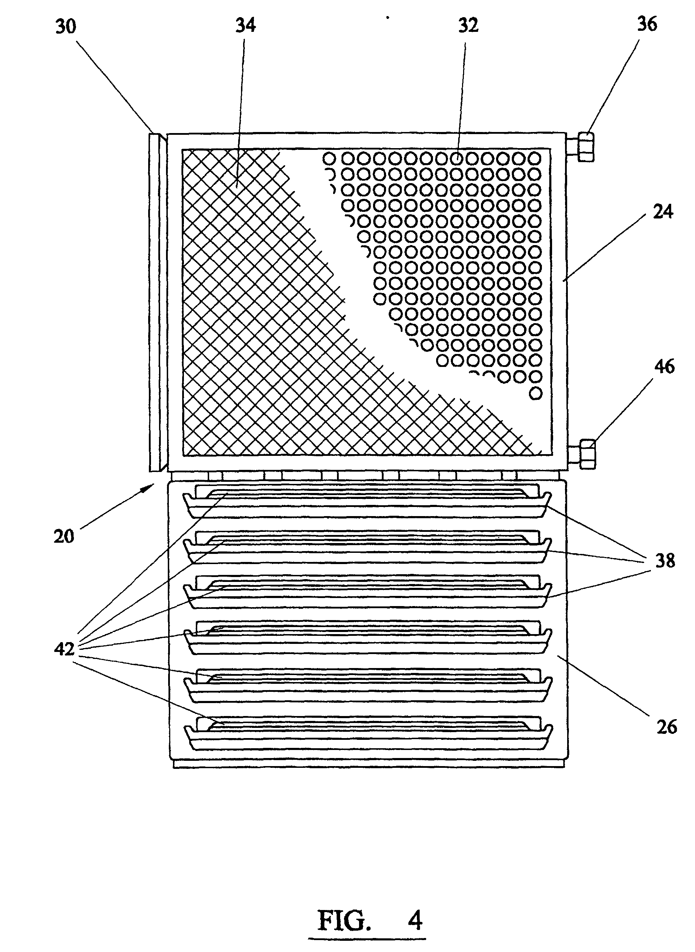

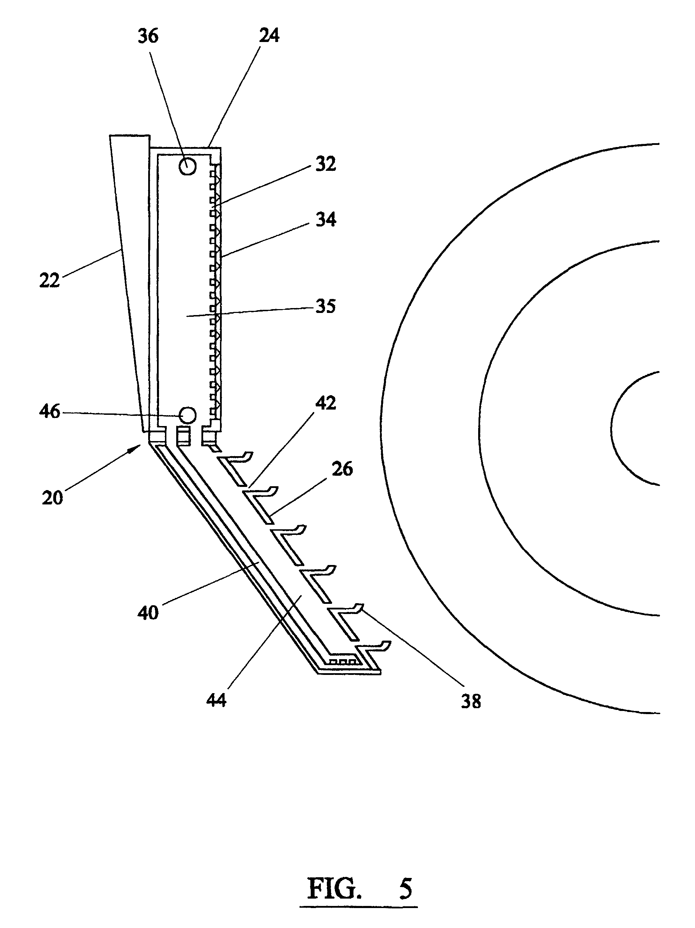

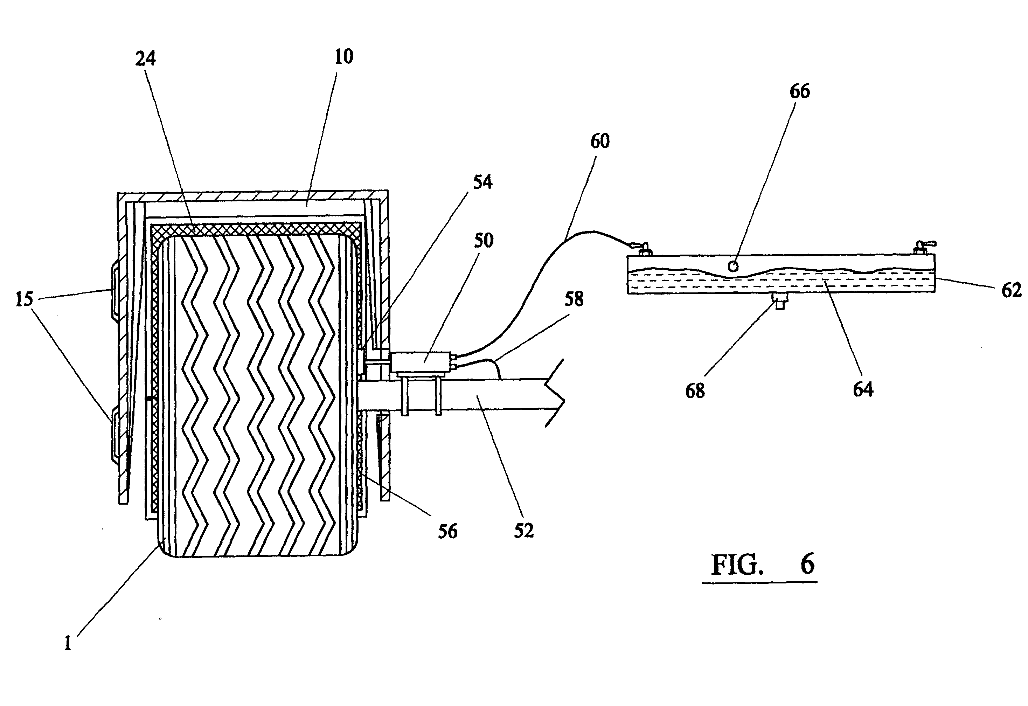

The suction panel 24 (Figures 4 and 5) extends the full width of the enclosure 10 (Figure 6), which may be wide enough for one, as shown in the drawings, or more typically two road wheels side by side, in which case two adjacent panels can be joined by connector 30. The suction panel has, on its face towards the interior of the enclosure 10, a plurality of apertures 32, covered by a fine grill or mesh cover 34. This cover is to prevent stones or foreign bodies from entering and blocking the apertures. The apertures all connect within the panel to chamber 35 which is evacuated through outlets 36, 46 respectively at the top and bottom of one side of the suction panel.

The lower drain panel 26 is provided with a plurality of horizontally extending lips 38. The lower panel is angled so that the lower portion of the panel inclines forwardly. Above each lip 38 is a horizontal aperture extending across the greater part of the width of the panel, forming a drain channel or slot 42, into which liquid water running down the panel is directed by the corresponding lip. Each aperture opens into chamber 44, from which air is extracted to suction panel chamber 35, and from which liquid water is extracted by means of pipe 40 from the bottom of drain panel chamber 44 to outlet 46 at the base of the upper suction panel.

In use, outlet 36 is a duct connected to an extractor pump and outlet 46 is a duct connected to a water removal pump. In practice, the same pump may be connected to both outlets. As the vehicle travels forwards over a wet road, the high capacity pump extracts air from the enclosure 10, which is largely replaced by front wheel spray drawn in through the air scoops 15 and the scoop formed by the open front end 28. By using the scoops in the side panel, air is drawn into the enclosure into the space between the side panel and the wheel by the forward motion of the vehicle. This additional air flow from side to back inside the enclosure is believed to assist in drawing air into the open front of the enclosure, by inducing a reduced pressure inside the front of the partial enclosure. The extractor pump likewise assists in reducing air pressure, so that, at the front of the enclosure, airborne spray thrown up from ahead of the apparatus is drawn into the enclosure and the water in the spray is then condensed and removed at the rear wall panel.

Heavier water droplets thrown up by the wheels 1 tend to collect on the drain panel 26, either directly or by running down from the mesh 34, while finer spray droplets are entrained in air passing through the mesh and into the suction holes 32 of the suction panel 24.

Figure 6 shows one possible arrangement for providing pump suction and collecting the extracted water. A simple vacuum pump 50 is mounted on the rear axle 52, taking a quiet and cushioned friction drive by means of a rubber sleeved drive wheel 54 from the inside of wheel rim 56. A simple clutch (not shown) is provided to connect the drive wheel 54 to the internal pump mechanism as required. An inlet hose 58 draws in air and water from chamber outlets 36 and 46, and an outlet hose 60 delivers the air and water to a reservoir tank 62, where the extracted water 64 is stored. The reservoir is centrally located under the trailer bed, and is also fed by exactly similar spray reducing apparatus on the opposite side of the vehicle, in which all the elements described are duplicated.

The accumulated water may be disposed of in various ways. In some vehicles, it may be used for the brake cooling system. An overflow pipe 66 may be provided to vent air and to allow excess liquid water to run out on to the road under the vehicle, away from the wheels, and a drain valve 68 may also be included.

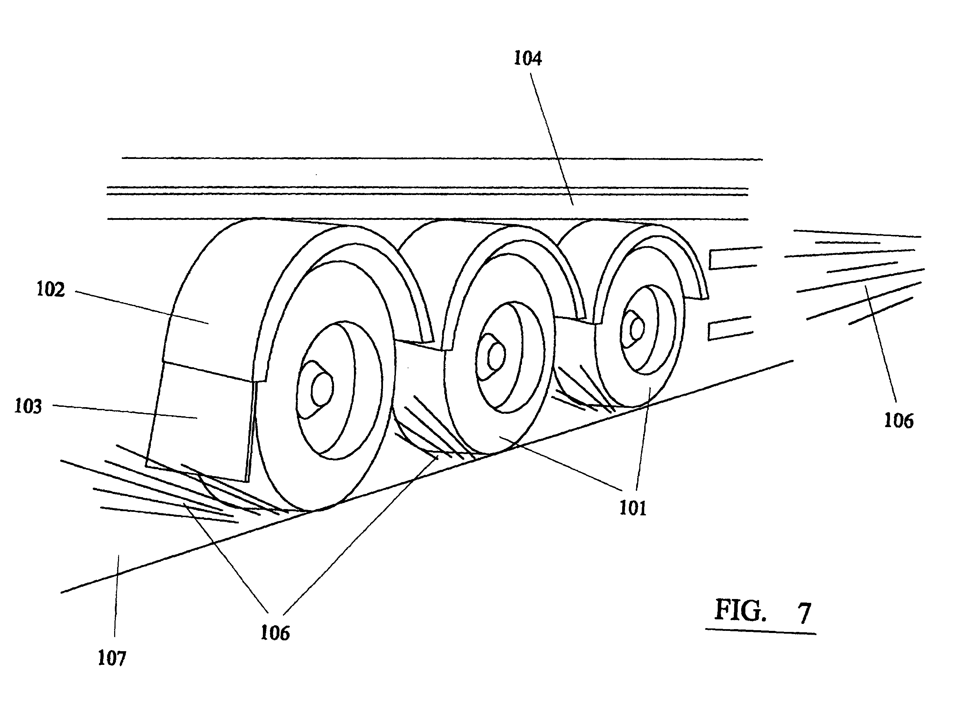

The second embodiment of the invention is applied to the rear wheel set shown in Figure 7. Three in-line rear wheels 101 of an articulated trailer are provided with mudguards 102 and rear mud flap 103 under a trailer bed 104. Water spray 106 is thrown up from wet road surface 107.

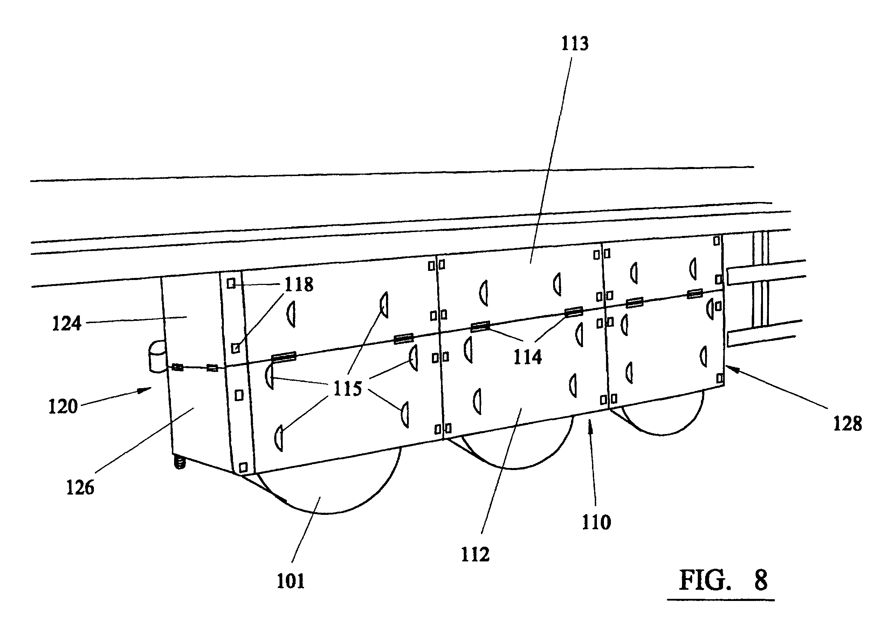

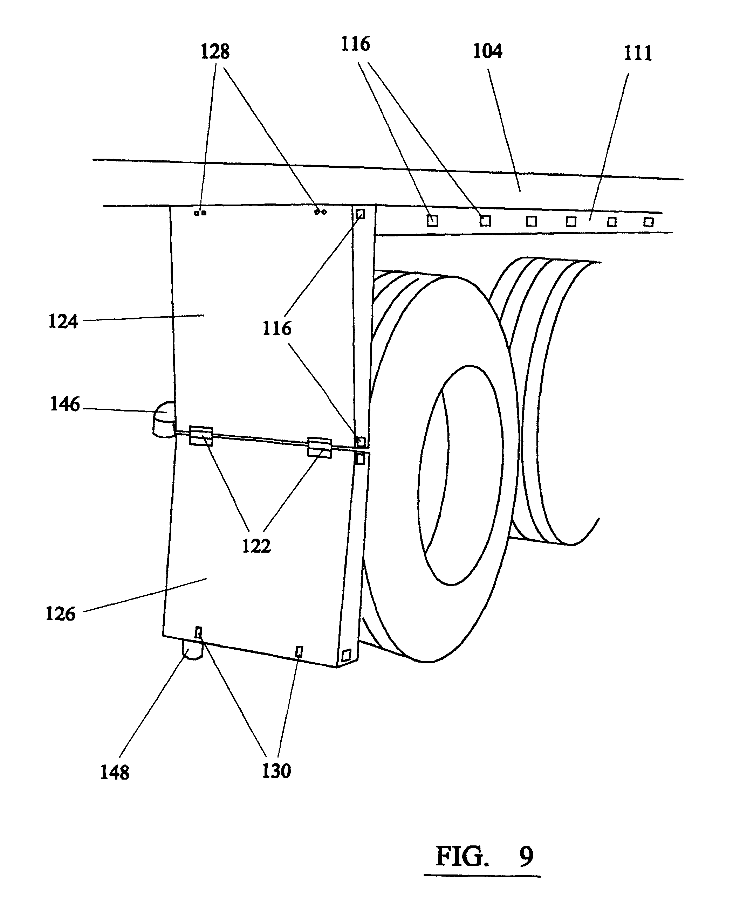

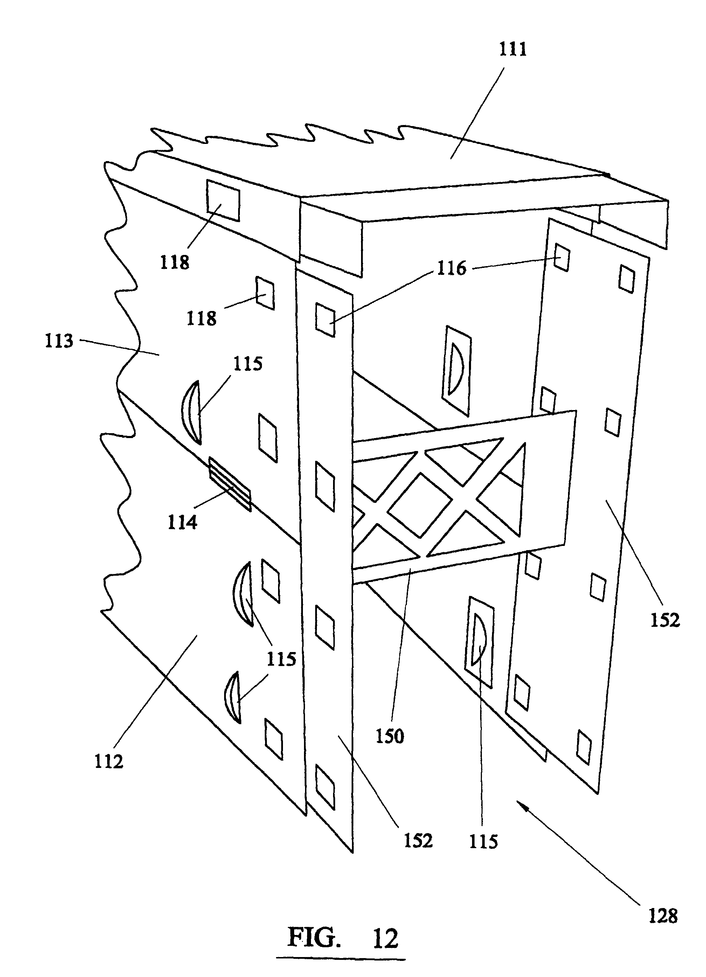

In order to apply apparatus according to the invention to the wheel set as shown in Figure 8, mudguards 102 and mud flap 103 are entirely removed, so that a partial enclosure 110 can be assembled around wheels 101. In this case, a distinct top wall 111 (Figures 9,12) is fastened directly to the underside of trailer bed 104, and fittings on the vehicle previously used to attach mudguards 102 are adapted as required to support the remainder of the apparatus, which is also fastened to the top wall.

The essentials of the partial enclosure are provided by side wall panels and rear wall panels. An upper rear panel 124 and a lower rear wall panel 126, joined by hinges 122, together make up the rear wall 120. Each of the three wheels 101 has, on each side of it, an upper side wall panel 113 fastened sealingly to top wall 103, and a lower side wall panel 112 which is jointed by hinges 114 to the lower edge of the upper panel 113. The hinges 114, 122 allow the lowest wall panels of the enclosure to be raised so that the vehicle can travel over uneven surfaces without damaging the apparatus.

The side wall panels, rear wall panels and the top wall are all interconnected by speed fasteners 118, with appropriate use of sealing strips between the wall components.

Each of the side wall panels 112,113 is provided with air inlet scoops 115, which are generally arranged so that they direct air flowing past the outside of the enclosure in to the region of the tyres. In addition to benefiting the airflow through the enclosure, this gives enhanced tyre cooling, as will be described below.

The front of partial enclosure 110 is entirely open, forming an air intake 128.

Figure 9 shows more detail, illustrating the fixing points 116 for the speed fasteners in the rear wall panels and in the top wall 111. Mutually complementary snap fasteners, or optionally magnetic fasteners, indicated at 128 on upper rear wall panel 124 and at 130 on lower rear wall panel 126, provide the means of retaining the lower panel when it is hinged up quickly to increase ground clearance. Similar means are provided for the side wall panels 112, 113.

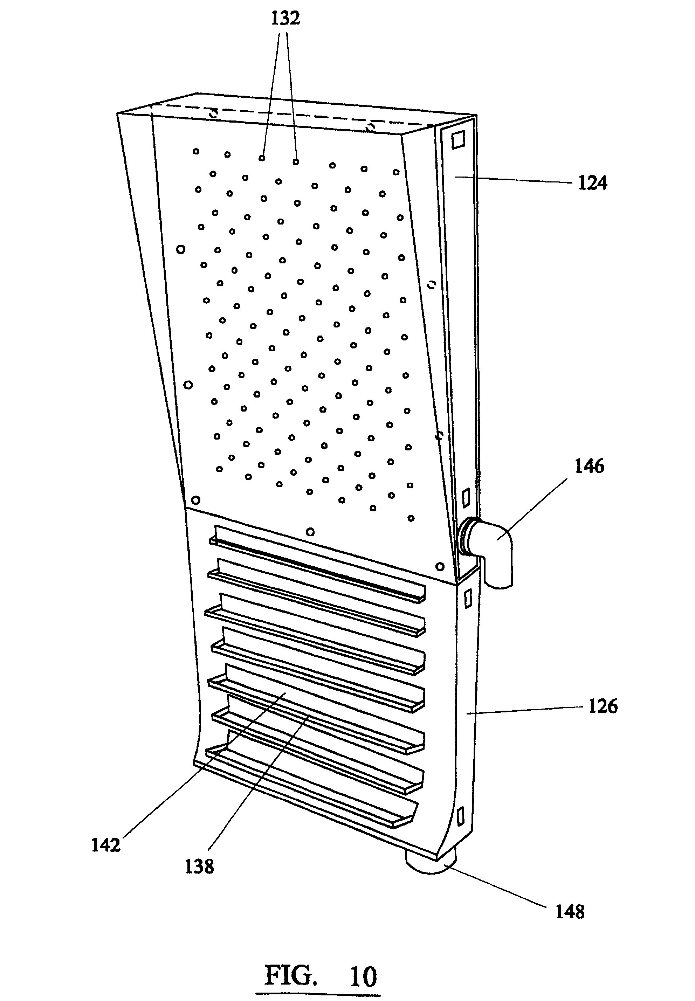

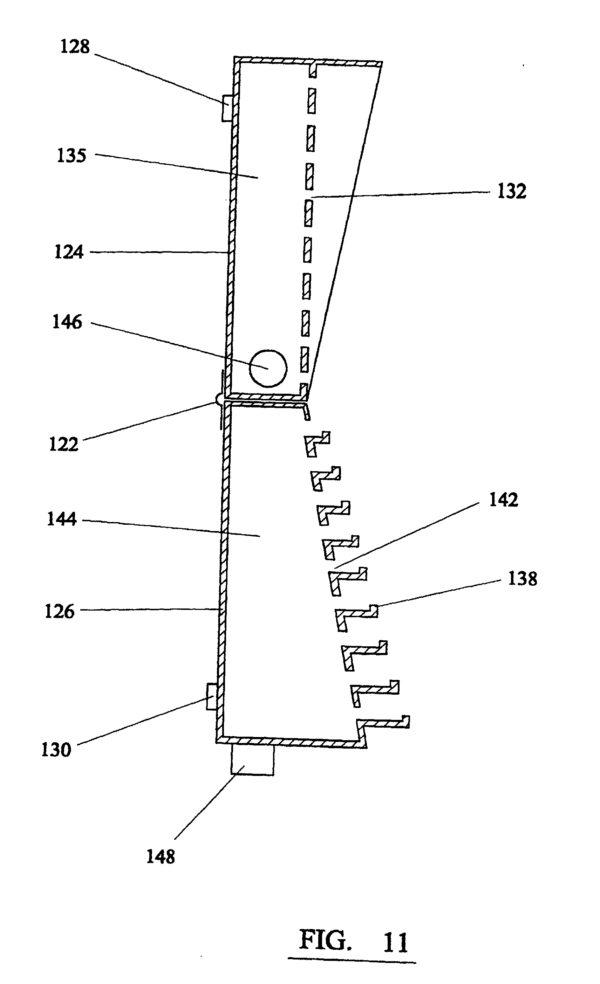

Figures 10 and 11 show rear wall 120 comprising two hollow panels. The upper panel 124 has a front face perforated with apertures 132 that are large enough not to become clogged with mud from the water spray to which they are exposed; rather, the water washes any deposits through the apertures, into the internal chamber 135. A grill over the upper panel is optional. Water, air and solids are all discharged through outlet duct 146 which leads the water and solids, by gravity flow, to a reservoir (not shown, but similar to tank 62, Figure 6) under the trailer bed 104.

The lower panel 126 is similar in essentials to panel 26, Figures 4 and 5, with lips 138 and apertures 142 leading liquid water to the interior chamber 144. However, the liquid water drains from chamber 144 by outlet duct 148 directly on to the road surface. It is found that a narrow stream of water does not create significant new spray, but if water were to fall from the panel in a sheet, it would at once revert to spray. The face of panel 126 curves forward nearer the road surface, as lips 138 also reach further forward, to better collect water behind the nearest wheel and direct it into the chamber 144.

Figure 12 shows a detail of the air intake 128. The structure shown is replicated over each road wheel 101. An H shaped brace is made up of side pieces 152 and a central cross member 150. The side pieces provide fixing points 116 for fasteners 118 on adjacent side panels 112 and 113.
The cross member 150 lies ahead of a wheel, is perforated for good air flow, and maintains the separation of the side walls.

In both illustrated embodiments of the invention, there is a low pressure region maintained at the inlets 28, 128 to the partial wheel enclosures by the action of the side scoops 15, 115 and any extractor pump or pumps, which draws road water spray into the apparatus for water removal.

Tests were carried out using apparatus as described with reference to Figures 7 to 12, on a Frauhof tri-axle curtain side trailer, maximum load 22.5 tonnes, drawn by an articulated tractor unit, with three wheels In line on each side as illustrated. The tyre sizes were 385/65 R22.5, and the trailer was about half laden, carrying about 10 tonnes.

The lower edges of the side and rear walls were 120mm from the road surface; the pneumatic suspension would allow 100mm compression, leaving a safety clearance of at least 20mm from the road surface.

By fitting the apparatus to one side only, visual comparisons could be made of effectiveness at a road speed of about 100kph (60mph). Effective spray reduction by the apparatus was observed.

At the same time, tyre wall temperatures were measured. The starting temperature was 14.1 °C. After 160 km (100 miles) the tyre wall temperatures were 20.6°C inside the apparatus, and 22.4°C on the open side. After 457 km (284 miles) the respective temperatures were 21.3°C and 22.3°C. This demonstrates that as well as reducing spray, the apparatus aids cool tyre running, presumably by the enhanced air flow past the tyres, despite the enclosure of the wheels.

## Claims

1. Apparatus for reducing road vehicle spray comprising a partial enclosure (10,110) for a vehicle road wheel (1,101), the partial enclosure being defined by a top wall (2,111) above the road wheel, a rear wall (20,120) behind the road wheel (determined in accordance with the normal direction of forward motion of the vehicle), and a side wall (12,14; 112,113) depending from the top wall and extending forwardly from the rear wall on each side of the road wheel, wherein the front (28,128) of the partial enclosure is substantially open and a side wall is provided with one or more air scoops (15,115) for directing air passing outside the enclosure into the enclosure; ***characterised in that*** the rear wall comprises a panel (24,26; 124,126) with a forward face towards the interior of the enclosure, an internal chamber (35,44; 135,144) in the panel behind the forward face, apertures (32,42; 132,142) in the forward face for admitting into the chamber water collected from water spray in the partial enclosure, and a water outlet (36,46; 146,148) from the chamber.

2. Apparatus according to claim 1, wherein the side walls (12,14; 112,113) reach to within 150mm of the road surface when the vehicle is unladen.

3. Apparatus according to claim 1 or claim 2 wherein the side walls (12,14; 112,113) reach to within 50mm of the road surface when any suspension for the road vehicle wheel is compressed to its maximum extent.

4. Apparatus according to any one of the preceding claims wherein the wheel (1,101) has a pneumatic tyre and the side walls (12,14; 112,113) of the partial enclosure (10,110) have lower edges situated alongside the inflated pneumatic tyre vertically below the wheel hub.

5. Apparatus according to any one of the preceding claims wherein a said air scoop (15,115) is situated whereby to direct brake cooling air into the partial enclosure (10,110) in the region of a wheel hub.

6. Apparatus according to any one of the preceding claims wherein a said air scoop (15,115) is situated whereby to direct tyre cooling air into the partial enclosure (10,110) in the region of a wheel tyre.

7. Apparatus according to any one of the preceding claims wherein the apertures in the forward face of the rear wall panel (26,126) include elongate apertures (42,142) extending horizontally across the greater part of the width of the face of the panel to receive liquid water running down the panel and direct it into the internal chamber (44,144).

8. Apparatus according to claim 7 comprising lips (38,138) below the respective elongate apertures (42,142) to direct the water running down the panel into the apertures.

9. Apparatus according to any one of the preceding claims wherein a lower portion of the rear wall panel (26,126) is angled forwards towards the wheel ahead of it.

10. Apparatus according to any one of the preceding claims wherein the water outlet comprises a duct (68,148) adapted to discharge liquid water on to the road.

11. Apparatus according to any one of claims 1 to 9 wherein the water outlet comprises a duct (58) connected to a pump (50) for extracting air and water droplets from the partial enclosure (10,110) through the apertures (32,42; 132,142) in the forward face of the rear wall panel (24,26; 124,126).

12. Apparatus according to any of claims 1 to 9 wherein the water outlet comprises a duct (58) leading to a pump (50) for removing water from the chamber and delivering it to a reservoir (62).

13. Apparatus according to any one of the preceding claims wherein the side walls (112,113) and the rear wall (120) of the partial enclosure are hinged whereby they can be raised for travel of the vehicle over uneven ground.

## Patentansprüche

1. Einrichtung zur Verringerung von Straßenfahrzeug-Spritzer, enthaltend ein Teilgehäuse (10, 110) für ein Straßenfahrzeugrad (1, 101), welches Teilgehäuse begrenzt ist durch eine Oberwand (2, 111) oberhalb des Straßenrades, eine Rückwand (20, 120) hinter dem Straßenrad (bestimmt in Übereinstimmung mit der normalen Richtung der Vorwärtsbewegung des Fahrzeuges), und eine Seitenwand (12, 14; 112, 113), die von der Oberwand nach unten hin anschließt und sich von der Rückwand an jeder Seite des Straßenrades nach vom erstreckt, wobei die Vorderseite (28, 128) des Teilgehäuses im wesentlichen offen ist und eine Seitenwand mit einem oder mehreren Luftfängern (15, 115) versehen ist, um an der Außenseite des Gehäuses entlangströmende Luft in das Gehäuse zu lenken;
**dadurch gekennzeichnet, daß** die Rückwand eine Platte (24,26; 124, 126) mit einer zum Inneren des Gehäuses gerichteten Vorderfläche, eine Innenkammer (35, 44; 135, 144) in der Platte hinter dieser Vorderseite, Öffnungen (32, 42; 132, 142) in der Vorderseite zum Einlassen von Wasser in die Kammer, das sich von Spritzwasser in dem Teilgehäuse angesammelt hat, und einen Wasserauslaß (36, 46; 146, 148) aus der Kammer enthält.

2. Einrichtung nach Anspruch 1, bei der die Seitenwände (12, 14; 112, 113) bis zu innerhalb 150 mm von der Straßenoberfläche reichen, wenn das Fahrzeug unbeladen ist.

3. Einrichtung nach Anspruch 1 oder 2, bei der die Seitenwände (12, 14; 112, 113) bis zu innerhalb 50 mm von der Straßenoberfläche reichen, wenn irgendeine Federung des Sttraßenfahrzeugrades in maximalem Umfang zusammengedrückt ist.

4. Einrichtung nach einem der vorhergehenden Ansprüche, bei der das Rad (1, 101) einen Luftreifen hat und die Seitenwände (12, 14; 112, 113) des Teilgehäuses (10, 110) untere Ränder hat, die entlang des aufgepumpten Luftreifens vertikal unter der Radnabe liegen.

5. Einrichtung nach einem der vorhergehenden Ansprüche, bei der einer dieser Luftfänger (15, 115) angeordnet ist, um Reifenkühlluft in das Teilgehäuse (10, 110) im Bereich einer Radnabe zu richten.

6. Einrichtung nach einem der vorhergehenden Ansprüche, bei der einer dieser Luftfänger (15, 115) angeordnet ist, um Reifenkühlluft in das Teilgehäuse (10, 110) im Bereich eines Radreifens zu richten.

7. Einrichtung nach einem der vorhergehenden Ansprüche, bei dem die Öffnungen in der Vorderseite der Rückwandplatte (26, 126) längliche Öffnungen (42, 142) enthalten, die sich horizontal über den größeren Teil der Breite der Fläche der Platte erstrecken, um flüssiges Wasser, das entlang der Platte entfließt, aufzunehmen und in die Innenkammer (44, 114) zu lenken.

8. Einrichtung nach Anspruch 7, enthaltend Lippen (38, 138) unterhalb der jeweiligen länglichen Öffnungen (42, 142), um an der Platte nach unten fließendes Wasser in die Öffnungen zu lenken.

9. Einrichtung nach einem der vorhergehenden Ansprüche, bei der ein unterer Abschnitt der Rückwandplatte (26, 126) nach vorn in Richtung des davorliegenden Rades abgewinkelt ist.

10. Einrichtung nach einem der vorhergehenden Ansprüche, bei der der Wasserauslaß einen Kanal (68, 148) enthält, der in der Lage ist, flüssiges Wasser auf die Straße abfließen zu lassen.

11. Einrichtung nach einem der Ansprüche 1 bis 9, bei der der Wasserauslaß einen Kanal (58) aufweist, der an eine Pumpe (50) angeschlossen ist, um Luft und Wassertropfen aus dem Teilgehäuse (10, 110) durch die Öffnungen (32,42; 132, 142) in der Vorderseite der Rückwandplatte (24, 26; 124, 126) abzusaugen.

12. Einrichtung nach einem der Ansprüche 1 bis 9, bei der der Wasserauslaß einen zu einer Pumpe (50) führenden Kanal (58) zum Absaugen von Wasser aus der Kammer und zum Zuführen desselben in einem Speicherbehälter (62) enthält.

13. Einrichtung nach einem der vorherigen Ansprüche, bei der die Seitenwände (112, 113) und die Rückwand (120) des Teilgehäuses beweglich angebracht sind, wodurch sie für eine Fahrt des Fahrzeuges über unebenen Boden angehoben werden können.

## Revendications

1. Dispositif pour réduire les projections d'un véhicule routier comportant une enceinte partielle (10, 110) de roue de véhicule routier (1, 101), l'enceinte partielle étant définie par une paroi supérieure (2, 111) située au-dessus de la roue, une paroi arrière (20, 120) située derrière la roue (déterminé conformément à la direction normale de déplacement du véhicule vers l'avant), et une paroi latérale (12, 14 ; 112, 113) en déport de la paroi supérieure et s'étendant vers l'avant à partir de la paroi arrière sur chaque côté de la roue, l'avant (28, 128) de l'enceinte partielle étant pratiquement ouvert et la paroi latérale étant munie d'une ou plusieurs prises d'air (15, 115) destinées à diriger de l'air passant depuis l'extérieur de l'enceinte jusque dans l'enceinte, **caractérisé en ce que** la paroi arrière comporte un panneau (24, 26 ; 124, 126) ayant une face avant dirigée vers l'intérieur de l'enceinte, une chambre intérieure (35, 44 ; 135, 144) située dans le panneau derrière la face avant, des ouvertures (32, 42 ; 132, 142) situées dans la face avant pour admettre dans la chambre de l'eau recueillie à partir d'une projection d'eau dans l'enceinte partielle, et une sortie d'eau (36, 46 ; 146, 148) à partir de la chambre.

2. Dispositif selon la revendication 1, dans lequel les parois latérales (12, 14 ; 112, 113) parviennent au maximum jusqu'à 150 mm de la surface de la route lorsque le véhicule est hors charge.

3. Dispositif selon la revendication 1 ou 2, dans lequel les parois latérales (12, 14 ; 112, 113) parviennent au maximum jusqu'à 50 mm de la surface de la route lorsqu'une suspension quelconque de la roue du véhicule routier est comprimée à sa valeur maximale.

4. Dispositif selon l'une quelconque des revendications précédentes, dans lequel la roue (1, 101) a un pneumatique et les parois latérales (12, 14 ; 112, 133) de l'enceinte partielle (10, 110) ont des bords inférieurs situés le long du pneumatique gonflé, verticalement en dessous du moyeu de roue.

5. Dispositif selon l'une quelconque des revendications précédentes, dans lequel une prise d'air (15, 115) est située de manière à diriger de l'air de refroidissement des freins dans l'enceinte partielle (10, 110) dans la zone d'un moyeu de roue.

6. Dispositif selon l'une quelconque des revendications précédentes, dans lequel une prise d'air (15, 115) est située de manière à diriger de l'air de refroidissement des pneumatiques dans l'enceinte partielle (10, 110) dans la zone d'un pneumatique de roue.

7. Dispositif selon l'une quelconque des revendications précédentes, dans lequel les ouvertures dans la face avant du panneau de paroi arrière (26, 126) comportent des ouvertures allongées (42, 142) s'étendant horizontalement sur la moyenne partie de la largeur de la face du panneau pour recevoir de l'ea liquide descendant sur le panneau et la diriger à l'intérieur de la chambre intérieure (44, 144).

8. Dispositif selon la revendication 7 comportant des lèvres (38, 138) situées en dessous des ouvertures allongées respectives (42, 142) pour diriger l'eau s'écoulant vers le bas du panneau dans les ouvertures.

9. Dispositif selon l'une quelconque des revendications précédentes, dans lequel une partie intérieure du panneau de paroi arrière (26, 126) est inclinée vers l'avant en direction de la roue située en avant de celui-ci.

10. Dispositif selon l'une quelconque des revendications précédentes, dans lequel la sortie d'eau comporte un conduit (68, 148) adapté pour évacuer de l'eau liquide jusque sur la route.

11. Dispositif selon l'une quelconque des revendications 1 à 9, dans lequel la sortie d'eau comporte un conduit (58) relié à une pompe (54) pour extraire des gouttelettes d'air et d'eau à partir de l'enceinte partielle (10, 110) à travers les ouvertures (32, 42 ; 132, 142) existant dans la face avant du panneau de paroi arrière (24, 26 ; 124, 126).

12. Dispositif selon l'une quelconque des revendications 1 à 9, dans lequel la sortie d'eau comporte un conduit (58) aboutissant à une pompe (50) pour extraire de l'eau à partir de la chambre et l'envoyer vers un réservoir (62).

13. Dispositif selon l'une quelconque des revendications précédentes, dans lequel les parois latérales (112, 113) et la paroi arrière (120) de l'enceinte partielle sont articulées de telle sorte qu'elles peuvent être relevées pour le déplacement du véhicule sur un sol irrégulier.
